# EUROPÄISCHE PATENTSCHRIFT

(11) **EP 1 011 080 B1**
(45) Veröffentlichungstag und Bekanntmachung des Hinweises auf die Patenterteilung: **14.01.2004**
(21) Anmeldenummer: 99121096.4
(22) Anmeldetag: 22.10.1999
(51) Int. Cl.: G07F 7/08, G11C 16/10

(54) **Verfahren zum bidirektionalen Datentransfer zwischen einem Terminal und einer Chipkarte sowie Chipkarte**
Method for bidirectional datatransfer between a terminal and an ic-card and ic-card therefor
Méthode pour le transfert de données bidirectionnel entre un terminal et une carte à puce ainsi que carte à puce

(30) Priorität: 19.12.1998 DE 19858840
(43) Veröffentlichungstag der Anmeldung: 21.06.2000
(73) Patentinhaber: Orga Kartensysteme GmbH, 33104 Paderborn (DE)
(72) Erfinder: Schwier, Andreas, 32429 Minden (DE)

(56) Entgegenhaltungen:
- EP-A- 0 630 027
- EP-A- 0 831 433
- WO-A-94/24673
- WO-A-96/25743
- DE-A- 4 439 266
- FR-A- 2 665 791
- FR-A- 2 699 704
- FR-A- 2 757 978

## Beschreibung

Verfahren zum bidirektionalen Datentransfer zwischen einem Terminal und einer Chipkarte sowie Chipkarte

Die Erfindung betrifft ein Verfahren zum bidirektionalen Datentransfer zwischen einem Terminal und einer Chipkarte nach dem Oberbegriff des Patentanspruchs 1 sowie eine Chipkarte nach dem Oberbegriff des Patentanspruchs 2.

Die EP 0 630 027 A1 offenbart ein Verfahren zum bidirektionalen Datentransfer zwischen einem Terminal und einer Chipkarte mit Geldbörsenfunktion, bei dem zum Sichern der Speichervorgänge beim Einspeichern der Daten eine zusätzliche Sicherungszone vorgesehen ist, in der das einzuschreibende Datum eingeschrieben wird. Nachfolgend wird in einem Flag-Speicher das Datum "Speichervorgang läuft" eingespeichert. Nun kann der eigentliche Speichervorgang beginnen, wobei das entsprechende Datum in einer vorgesehenen Datenzone abgespeichert wird. Nach Beendigung dieses Speichervorgangs wird in den Flag-Speichern das Datum "Speichervorgang läuft nicht" gesetzt. Nachteilig an diesem bekannten Verfahren ist, dass zur Gewährleistung eines sicheren Abspeichern des Datenwertes in der dafür vorgesehenen Datenzone zusätzlich ein Abspeichern desselben Datenwertes in einer Sicherungszone erforderlich ist. Hierdurch muss jeder Datenwert doppelt abgespeichert werden.

Aus der DE 44 39 266 A1 ist ein Verfahren zum bidirektionalen Datentransfer zwischen einem Terminal und einer Chipkarte bekannt, bei dem unterschiedliche Wertebereiche aktiviert werden, die jeweils als mehrstufige Zähler ausgeführt sind. Den unterschiedlichen Wertebereichen sind jeweils Flag-Speicher zugeordnet, wobei eine Änderung des Flag-Speichers einen zu ändernden Wertebereich aktiviert. Anhand des Flag-Speicher ist ersichtlich, welcher der Wertebereiche aktiviert ist. Zur Verarbeitung von Kontostandsdaten in einer Geldbörse ist das bekannte Verfahren nicht vorgesehen.

Aus der FR 2 699 704 A1 ist ein Verfahren zum bidirektionalen Datentransfer zwischen einem Terminal und einer Chipkarte bekannt, bei dem ein Flag-Speicher als Protokollspeicher während des Einschreiben eines Datenwerts in einen dafür vorgesehenen Datenspeicher ausgebildet ist. Anhand dieses Protokollspeichers kann erkannt werden, in welchem Stadium des Speichervorgangs ein Fehler aufgetreten ist. Eine Zählfunktion weist somit der Flag-Speicher nicht auf.

Aus der DE 196 05 361 A1 ist ein Verfahren zum bidirektionalen Datentransfer zwischen einem Terminal und einer Chipkarte bekannt, bei dem Geldbeträge als Transferwerte in einen Kontostands-Speicher der Chipkarte eingeschrieben und abgespeichert werden. Wenn während einer solchen Transaktion eine Störung auftritt, beispielsweise durch einen Stromausfall oder durch das Herausziehen der Chipkarte aus dem Terminal, kann es zu der unerwünschten Situation kommen, daß der Transferwert nur unvollständig oder verändert abgespeichert wird. Mithin würde ein falscher Transaktionswert abgespeichert werden, so daß ein falscher Kontostand angenommen werden würde.

Aufgabe der Erfindung ist es daher, ein Verfahren zum bidirektionalen Datentransfer zwischen einem Terminal und einer Chipkarte sowie eine Chipkarte derart anzugeben, daß ein unvollständiger Schreibzugriff auf einen Kontostands-Speicher der Chipkarte sicher erkannt und ggfs. bei Vorliegen einer Störung der Inhalt des Kontostands-Speichers in den ursprünglichen Zustand zurückgesetzt werden kann.

Zur Lösung dieser Aufgabe weist die Erfindung die Merkmale des Patentanspruchs 1 bzw. 2 auf.

Erfindungsgemäß ist ein Kontroll-Speicher vorgesehen, in dem während des Transfers eines aktuellen Kontostandes von dem Terminal zu der Chipkarte ein Einschreib-Kontrollwert erzeugt wird, der dem mit dem aktuellen Kontostand zu beschreibenden Kontostands-Speicher der Chipkarte zugeordnet ist. Der Inhalt des Kontroll-Speichers ist abhängig von dem Beginn und Ende des Transfervorgangs. Vorzugsweise weist der Kontroll-Speicher während des Transfervorgangs einen Einschreib-Kontrollwert auf, der gelöscht wird, sobald der aktuelle Kontostand vollständig in den betreffenden Kontostands-Speicher eingeschrieben worden ist. Eine ordnungsgemäße Übertragung und Abspeicherung des den neuen Kontostand repräsentierenden Transferwertes kann somit erkannt werden.

Der Kontroll-Speicher ist als eine Speicherzelle in der Chipkarte ausgebildet, wobei der Einschreib-Kontrollwert während des Tranfers konstant gehalten wird. Somit befindet sich der Kontroll-Speicher in einem eindeutigen unveränderlichen Schreibkennungszustand während des Transfers. Dieser Zustand kann erst nach Feststellung des ordnungsgemäßen Transfers in einen veränderbaren Schreibbestätigungszustand überführt werden. Als Bestätigungssignal für Wechsel des Zustandes des Kontroll-Speichers von dem Schreibkennungszustand in den Schreibbestätigungszustand kann ein Signal der I/O-Schnittstelle sein, das das Ende des Transfers signalisiert.

Nach der Erfindung wird bei erfolgreichem Schreibvorgang der Einschreib-Kontrollwert durch einen Bestätigungswert ersetzt, der in dem Schreibbestätigungszustand die fortlaufende Nummerierung der in dem Schreibbestätigungszustand als Zählerstand die fortlaufende Nummerierung des in dem Kontostands-Speicher abgespeicherten Kontostands angibt. Somit kann bei einer Mehrzahl von Kontostands-Speichern anhand der in dem Kontroll-Speicher gespeicherten Sequenznummer jederzeit der Kontostands-Speicher mit dem aktuellen Kontostand erkannt werden.

Nach einer Weiterbildung der Erfindung sind für ein Geldbörsenkonto genau zwei Kontostand-Speicher vorgesehen, wobei in dem einen Kontostand-Speicher der aktuelle Kontostand und in dem anderen der alte Kontostand abgespeichert sind. Bei einem erneuten Einschreiben eines Transferwertes in den Börsenspeicher der Chipkarte wird der Transferwert in den den alten Kontostand aufweisenden Kontostand-Speicher eingeschrieben. Nach erfolgreichem Transfer erhält der diesem zugeordnete Kontroll-Speicher eine höhere Sequenznummer, so daß dieser nunmehr als der Kontroll-Speicher mit dem aktuellen Kontostand identifiziert werden kann.

Weitere Vorteile der Erfindung ergeben sich aus den weiteren Unteransprüchen.

Ein Ausführungsbeispiel wird nachfolgend anhand der Zeichnungen näher erläutert.

Es zeigen:
- Fig. 1: eine Blockschaltbild einer mit einem Terminal in Kommunikation befindlichen Chipkarte und
- Fig.2: eine Darstellung des Inhalts von zwei Kontostands-Speichern der Chipkarte in zeitlicher Abfolge während des Einschreibevorganges eines Transferwertes.

Eine Chipkarte 1 weist eine Geldbörsenfunktion mit insgesamt drei Börsen 2, 3, 4 auf. Jede Börse 2, 3, 4 ist einem gesonderten Speicherbereich eines EEPROM-Speichers 5 der Chipkarte 1 zugeordnet. Der Speicherinhalt der Börsen 2, 3, 4 ist in üblicher Weise über einen Mikroprozessor 9 der Chipkarte ansteuerbar bzw. veränderbar.

Der Mikroprozessor 9 ist über eine I/O-Schnittstelle 6 mit einer I/O-Schnittstelle 7 eines Terminals 8 verbindbar, so daß für einen Bezahlvorgang eine Kommunikation bzw. ein Datentransfer zwischen der Chipkarte 1 und dem Terminal 8 stattfinden kann.

Zur Speicherung der Geldbeträge in den Börsen 2, 3, 4 ist es ausreichend, daß den Börsen 2, 3, 4 jeweils zwei Kontostands-Speicher 2.11, 2.21 bzw. 3.11, 3.21 sowie 4.11, 4.21 als Börsenspeicher zugeordnet werden. In dem einen Kontostands-Speicher 2.11 der Börse 2 bzw. 3.11 der Börse 3 oder 4.11 der Börse 4 ist beispielsweise ein erster Kontostand K2.1 für Börse 2 bzw. K3.1 für Börse 3 sowie K4.1 für Börse 4 gespeichert. In dem anderen Kontostands-Speicher 2.21 der Börse 2 bzw. 3.21 der Börse 3 oder 4.21 der Börse 4 ist beispielsweise ein zweiter Kontostand K2.2 für Börse 2 bzw. K3.2 für Börse 3 sowie K4.2 für Börse 4 gespeichert.

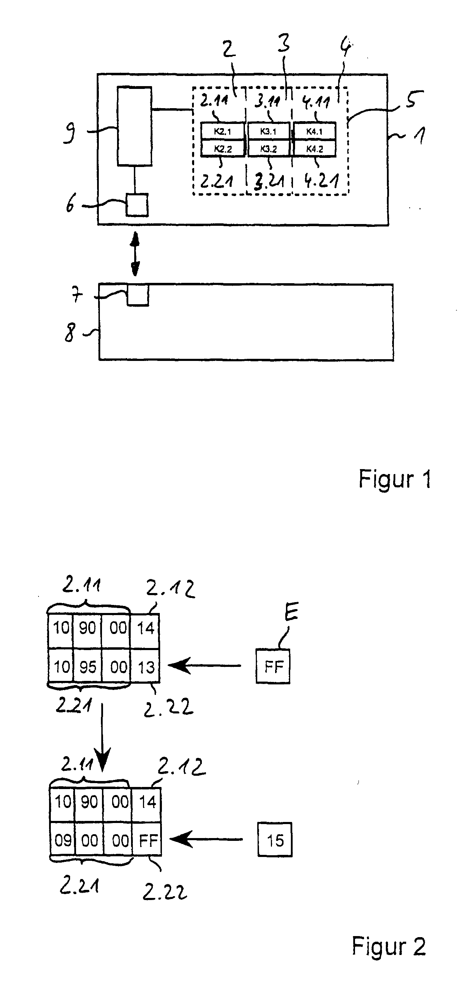

Die Kontostands-Speicher 2.11, 2.21, 3.11, 3.21, 4.11, 4.21 kann jeweils beispielsweise drei Teilspeicher aufweisen, in denen jeweils ein zweistelliger numerischer Wert gespeichert ist. Zusammen beinhalten die Teilspeicher des jeweiligen Kontostands-Speichers 2.11, 2.21, 3.11, 3.21, 4.11, 4.21 einen vierstelligen Transferwert mit zwei Nachkommastellen, wie es aus Fig. 2 ersichtlich ist.

Dort sind schematisch die Speicherinhalte der Kontostands-Speicher 2.11 und 2.21 der Börse 2 dargestellt. Jedem Kontostands-Speicher 2.11 und 2.21 ist ein Kontostands-Zähler 2.12 bzw. 2.22 zugeordnet, in dem der aktuelle Zählerstand der Buchung in der Börse 2 gespeichert ist. Beispielsweise ist in dem Kontostands-Speicher 2.21 ein Wert von 1095,00 gespeichert, der die dreizehnte Buchung der Börse 2 darstellt, wie es durch den Kontostands-Zähler 2.22 ausgewiesen ist. Der aktuelle Kontostand der Börse 2 ist in dem Kontostands-Speicher 2.11 gespeichert, beträgt 1090,00 und stellt die vierzehnte Buchung der Börse 2 dar, wie durch den Kontostands-Zähler 2.12 festgehalten ist.

Soll nun durch Datentransfer im Zuge eines Bezahlvorgangs ein neuer Transferwert in die Börse 2 eingespeichert werden, so wird der entsprechende Transferwert in den Kontostands-Speicher 2.21 mit dem niedrigeren Zählerstand des Kontostands-Zähler 2.22 eingeschrieben. Vorher wird jedoch der Kontostands-Zähler 2.22 in einen Kontrollspeicher überführt, in dessen Speicher ein Einschreib-Kontrollwert E des Betrages FF (Hexadezimalwert) eingeschrieben wird. Dieser Einschreib-Kontrollwert E kennzeichnet den Schreibkennungszustand des Kontrollspeichers 2.22, wobei in den Kontostand-Speicher 2.21 ein Transferwert eingeschrieben werden kann.

Nachfolgend wird der Transferwert 900,00 in den Kontostand-Speicher 2.21 eingeschrieben, der den neuen Kontostand der Börse 2 wiedergibt. Der Kontrollspeicher 2.22 bleibt unverändert, bis er in einen Schreibbestätigungszustand überführt wird, der mit der Änderung des Inhalts des Kontrollspeichers 2.22 einhergeht. Dieser erhält einen Bestätigungswert "15", der zugleich als Zählerstand für die Anzahl der in der Börse 2 vorgenommenen Buchungen oder Kontostände dient. Der Kontrollspeicher 2.22 dient somit nach erfolgreich durchgeführten Schreibzugriff auf den Kontostand-Speicher 2.21 wieder als Kontostandszähler.

Wäre das Schreiben des Transferwertes in den Kontostand-Speicher 2.21 unvollständig abgelaufen, würde der Kontrollspeicher 2.22 weiterhin im Schreibkennungszustand verharren und mit dem Speicherinhalt "FF" anzeigen, daß der in den zugehörigen Kontostand-Speicher 2.21 eingeschriebene Transferwert unvollständig oder falsch ist. Darauffolgend würde dann der Inhalt des anderen Kontostand-Speicher 2.11 in den Kontostand-Speicher 2.21 eingeschrieben werden und eine Fehlermeldung erzeugt werden mit der Aufforderung, den Datentransfer erneut zu starten, d.h. das Einschreiben des Transferwertes zu wiederholen.

Die Erfindung schafft eine einfache und mit wenig Speichervorrat auskommende Verarbeitung und Speicherung von Transferwerten im Zusammenhang mit einem Bezahlvorgang. Insbesondere bei Vorliegen einer Mehrzahl von unterschiedlichen Börsen in einer Chipkarte 1 kann die erfindungsgemäße Vorrichtung vorteilhaft eingesetzt werden.

Der oben beschriebene Schreibvorgang kann ebenfalls bei den anderen Börsen 3 und 4 angewendet werden, die den gleichen Aufbau und Ansteuerung zu dem Mikroprozessor 9 aufweisen.

Alternativ kann jeder Börse 2, 3, 4 auch ein einziger Kontostands-Speicher 2.11, 3.11, 4.11 zur Speicherung des Kontostands zugeordnet sein. Zusätzlich ist ein einziger Kontostands-Speicher vorgesehen, der den aktuellen Transferwert aufnimmt und abspeichert. Die Zuordnung dieses zusätzlichen Kontostands-Speichers zu den Börsen 2, 3, 4 erfolgt nach dem Auswahlprinzip, d.h. ist abhängig von der Auswahl einer Börse 2, 3, 4 während des Transaktionsvorgangs. Wird beispielsweise ein Transaktionswert für die Börse 2 in diesen zusätzlichen Kontostands-Speicher eingeschrieben und wird die Transaktion als erfolgreich erkannt, dann gilt der in diesem zusätzlichen Kontostands-Speicher abgespeicherte Wert als neuer Kontostand der Börse 2. Der zusätzliche Kontostands-Speicher wird somit zum Kontostands-Speicher für die Börse 2 und der bisherige Kontostands-Speicher 2.11 der Börse 2 dient nunmehr als Transaktions- oder Pufferspeicher für die nächste Transaktion der Börse 2 oder der anderen Börsen 3 und 4. Bei jeder weiteren erfolgreichen Buchung wechselt die Funktionalität des aktuellen Transaktions- oder Pufferspeichers einerseits und des der jeweiligen aktivierten Börse 2, 3, 4 zugeordneten Kontostands-Speichers andererseits. Dieser gegenseitiger Wechsel der Funktion der beiden Speicher ist abhängig von der Auswahl der Börse 2, 3 oder 4.

Durch diese Maßnahme kann der Speicherbedarf weiter verringert werden, da üblicherweise zeitgleich nicht mehrere Transaktionen durchgeführt werden müssen.

## Patentansprüche

1. Verfahren zum bidirektionalen Datentransfer zwischen einem Terminal (8) und einer Chipkarte (1) mit Geldbörsenfunktion, wobei ein Transferwert von dem Terminal (8) in einem KontostandsSpeicher der Chipkarte (1) geschrieben wird, dass spätestens mit dem Einschreiben des Transferwertes in den Kontostands-Speicher (2.11, 2.21) ein Einschreib-Kontrollwert (E) in einen Kontrollspeicher (2.12, 2.22) geschrieben wird und dass der Einschreib-Kontrollwert (E) gelöscht wird, sobald der Transferwert vollständig in dem Kontostands-Speicher (2.11, 2.21) abgespeichert ist, **dadurch gekennzeichnet, dass** der Einschreib-Kontrollwert (E) in einen den Zählerstand der in der Börse (2) vorgenommenen Buchungen oder Kontostände repräsentierenden Bestätigungswert umgewandelt wird, sofern am Ende des Schreibzugriffs keine Störungsmeldung in der Chipkarte (1) vorgelegen hat.

2. Chipkarte (1) zum bidirektionalen Datentransfer zwischen einem Terminal (8) und einer Chipkarte (1) mit Geldbörsenfunktion, wobei die Chipkarte (1) mindestens einen Kontostands-Speicher zur Speicherung eines von dem Terminal (8) übertragenen Transferwertes aufweist, dass dem Kontostands-Speicher (2.11, 2.21) ein Kontrollspeicher (2.12, 2.22) zur Speicherung eines Einschreib-Kontrollwertes (E) zugeordnet ist, der in Abhängigkeit von dem Vorliegen einer Störung veränderbar ist, so dass der in dem Kontostands-Speicher (2.11, 2.21) gespeicherte Transferwert erst endgültig abgespeichert wird, wenn der Kontrollspeicher (2.12, 2.22) einen Schreibbestätigungszustand eingenommen hat, **dadurch gekennzeichnet, dass** den Börsen (2, 3, 4) jeweils zwei Kontostands-Speicher (2.11, 2.21) zugeordnet sind, wobei in einem Kontostands-Speicher (2.11, 2.21) ein aktueller erster Kontostand (K 2.1) und in dem anderen Kontostands-Speicher (2.11, 2.21) ein vorhergehender zweiter Kontostand (K 2.2) abspeicherbar sind und dass der Einschreib-Kontrollwert (E) nach einem erfolgreich durchgeführten Schreibzugriff auf den Kontostand-Speicher (2.11, 2.21) in einen Bestätigungswert umgewandelt ist, so dass der Kontrollspeicher (2.12, 2.22) als Sequenzzähler ausgebildet ist.

3. Chipkarte (1) nach Anspruch 2., **dadurch gekennzeichnet, dass** der Kontrollspeicher (2.12, 2.22) in einen Speicher (5) der Chipkarte (1) integriert ist.

4. Chipkarte (1) nach einem der Ansprüche 2. bis 3., **dadurch gekennzeichnet, dass** der Kontrollspeicher (2.12, 2.22) mindestens zwei Zustände aufweist, wobei er in einem Schreibkennungszustand den Einschreib-Kontrollwert (E) und in einem Schreibbestätigungszustand einen Bestätigungswert aufweist.

5. Chipkarte (1) nach einem der Ansprüche 2. bis 4., **dadurch gekennzeichnet, dass** der Kontostands-Speicher und der Kontrollspeicher als nichtflüchtige Speicher ausgebildet sind.

6. Chipkarte (1) nach einem der Ansprüche 2. bis 5., **dadurch gekennzeichnet, dass** die Anzahl der Kontostands-Speicher (2.11, 3.11, 4.11) der um einen Wert von Eins erhöhten Anzahl der Börsen (2, 3, 4) entspricht und dass jeder Kontostands-Speicher (2.11, 3.11, 4.11) jeweils jeder Börse (2, 3, 4) zuordbar ist.

## Claims

1. Method for bidirectional data transfer between a terminal (8) and a smart card (1) having an electronic purse function, in which a transfer value is written by the terminal (8) in an account balance memory of the smart card (1), that at the latest when the transfer value is written into the account balance memory (2.11, 2.21) a write check value (E) is written into a control memory (2.12, 2.22) and that the write check value (E) is deleted as soon as the transfer value is fully stored in the account balance memory (2.11, 2.21), **characterized in that** the write check value (E) is converted into a confirmation value representing the counter status of the postings or account balances made in the purse (2) provided that no error message was present in the smart card (1) at the end of the write access.

2. Smart card (1) for bidirectional data transfer between a terminal (8) and a smart card (1) having an electronic purse function, in which the smart card (1) has at least one account balance memory for storing a transfer value transmitted by the terminal (8), that a control memory (2.12, 2.22) for storing a write check value (E) is assigned to the account balance memory (2.11, 2.21), which value can be changed depending on the presence of an error, so that the transfer value stored in the account balance memory (2.11, 2.21) is only finally stored when the control memory (2.12, 2.22) has assumed a write confirmation state, **characterized in that** in each case two account balance memories (2.11, 2.21) are assigned to the purses (2, 3, 4), wherein a current first account balance (K 2.1) can be stored in one account balance memory (2.11, 2.21) and a preceding second account balance (K 2.2) can be stored in the other account balance memory (2.11, 2.21), and **in that** following a successfully performed write access to the account balance memory (2.11, 2.21), the write check value (E) is converted into a confirmation value, so that the control memory (2.12, 2.22) is designed as sequence counter.

3. Smart card (1) according to Claim 2, **characterized in that** the control memory (2.12, 2.22) is integrated in a memory (5) of the smart card (1).

4. Smart card (1) according to one of Claims 2 to 3, **characterized in that** the control memory (2.12, 2.22) has at least two states, wherein it contains the write check value (E) in a write identification state, and a confirmation value in a write confirmation state.

5. Smart card (1) according to one of Claims 2 to 4, **characterized in that** the account balance memory and the control memory are designed as non-volatile memories.

6. Smart card (1) according to one of Claims 2 to 5, **characterized in that** the number of account balance memories (2.11, 3.11, 4.11) corresponds to the number of purses (2, 3, 4) incremented by a value of one, and that every account balance memory (2.11, 3.11, 4.11) can be assigned to every purse (2, 3, 4) in each case.

## Revendications

1. Procédé pour le transfert de données bidirectionnel entre un terminal (8) et une carte à puce (1), avec fonction de porte-monnaie, une valeur de transfert étant écrite à partir du terminal (8), dans une mémoire d'état de compte de la carte à puce (1), au plus tard lors de l'écriture de la valeur de transfert dans la mémoire d'état de compte (2.11, 2.21), une valeur de contrôle d'écriture (E) étant écrite dans une mémoire de contrôle (2.12, 2.22) et la valeur de contrôle d'écriture (E) étant effacée dès que la valeur de transfert est complètement enregistrée dans la mémoire d'état de compte (2.11, 2.21), **caractérisé en ce que** la valeur de contrôle d'écriture (E) est convertie en une valeur de confirmation qui représente l'état du compteur des passations en écriture effectuées dans le porte-monnaie (2) ou les états de compte, pour autant qu'aucun message de perturbations n'ait été inscrit dans la carte à puce (1) à la fin de l'accès en écriture.

2. Carte à puce (1) pour le transfert de données bidirectionnel entre un terminal (8) et une carte à puce (1) avec fonction de porte-monnaie, la carte à puce (1) présentant au moins une mémoire d'état de compte pour la mémorisation d'une valeur de transfert transmise par le terminal (8), une mémoire de contrôle (2.12, 2.22), pour la mémorisation d'une valeur de contrôle d'écriture (E), étant coordonnée à la mémoire d'état de compte (2.11, 2.21), laquelle est modifiable en fonction de la présence d'une perturbation, de sorte que la valeur de transfert, mémorisée dans la mémoire d'état de compte (2.11, 2.21), n'est définitivement conservée en mémoire que lorsque la mémoire de contrôle (2.12, 2.22) a pris un état de confirmation d'écriture, **caractérisée en ce que** deux mémoires d'état de compte (2.11, 2.21) sont coordonnées à chacun des porte-monnaie (2, 3, 4), un premier état de compte actuel (K 2.1) étant enregistré dans une mémoire d'état de compte (2.11, 2.21) et un deuxième état de compte ( 2.2) précédent étant enregistré dans une autre mémoire d'état de compte (2.11, 2.21), et la première valeur de contrôle d'écriture (E) étant convertie en une valeur de confirmation après qu'un accès à la mémoire de compte ait été effectué avec succès de sorte que la mémoire de contrôle (2.12, 2.22) est conçue en tant que compteur de séquences.

3. Carte à puce (1) selon la revendication 2, **caractérisée en ce que** la mémoire de contrôle (2.12, 2.22) est intégrée dans une mémoire (5) de la carte à puce (1).

4. Carte à puce (1) selon d'une des revendications 2 ou 3, **caractérisée en ce que** la mémoire de contrôle (2.12, 2.22) comprend, au moins, deux états, ladite mémoire de contrôle présentant, dans un état d'identification d'écriture, la valeur de contrôle d'écriture (E) et, dans un état de confirmation d'écriture, une valeur de confirmation.

5. Carte à puce (1) selon l'une des revendications 2 à 4, **caractérisée en ce que** la mémoire d'état de compte et la mémoire de contrôle sont conçues en tant que mémoires non volatiles.

6. Carte à puce (1) selon l'une des revendications 2 à 5, **caractérisée en ce que** le nombre des mémoires d'état de compte (2.11, 3.11, 4.11) correspond au nombre des porte-monnaie (2, 3, 4) plus un et que chaque mémoire d'état de compte (2.11, 3.11, 4.11) peut être coordonnée à chacun des porte-monnaie (2, 3, 4).
